# EUROPÄISCHE PATENTANMELDUNG

(11) **EP 1 936 161 A2**
(43) Veröffentlichungstag der Anmeldung: **25.06.2008**
(21) Anmeldenummer: 07122025.5
(22) Anmeldetag: 30.11.2007
(51) Int. Cl.: F02D 41/00, F02D 23/02, F02B 37/12, F02D 41/18

(54) **Verfahren zum Betrieb einer Brennkraftmaschine**

(30) Priorität: 20.12.2006 DE 102006060313
(71) Anmelder: ROBERT BOSCH GMBH, 70442 Stuttgart (DE)
(72) Erfinder: Winkler, Gunter, 70176, Stuttgart (DE); Nau, Michael, 72175, Dornhan/Aischfeld (DE); Hofmann, Dirk, 71706, Markgroeningen (DE)

(57) **Zusammenfassung**

Die Erfindung betrifft ein Verfahren zum Betrieb einer Brennkraftmaschine (10), bei der unter Umgebungsdruck stehende Frischluft mit Hilfe eines Verdichters (34), insbesondere eines Abgas-Turboladers (36), verdichtet und über eine Drosselvorrichtung (21) einem Brennraum (12) der Brennkraftmaschine (10) zugeführt wird, wobei die Drehzahl des Verdichters (34) mit Hilfe eines Sensors, insbesondere eines Drucksensors (46) ermittelt wird, wobei die Drehzahl des Verdichters (34) verwendet wird, um den Umgebungsdruck oder einen in Strömungsrichtung nach dem Verdichter (34) und vor der Drosselvorrichtung (21) anliegenden Ladedruck zu bestimmen.

## Beschreibung

### Stand der Technik

Die Erfindung betrifft ein Verfahren zum Betrieb einer Brennkraftmaschine nach dem Oberbegriff des Anspruchs 1.

Ein solches Verfahren ist in der nachveröffentlichten DE 10 2005 056 517.4 beschrieben.

### Offenbarung der Erfindung

Der vorliegenden Erfindung liegt die Aufgabe zugrunde, ein Verfahren zum Betrieb einer Brennkraftmaschine zu schaffen, mit dem der Aufbau der Brennkraftmaschine vereinfacht werden kann.

Diese Aufgabe wird durch ein Verfahren und eine Brennkraftmaschine mit den Merkmalen der nebengeordneten Patentansprüche gelöst. Vorteilhafte Weiterbildungen der Erfindung sind in Unteransprüchen genannt.

Im Rahmen der Erfindung wurde erkannt, dass es bei Kenntnis der Drehzahl des Verdichters möglich ist, auf einen Teil der für den Betrieb der Brennkraftmaschine erforderlichen Sensorik verzichten zu können. Die Kenntnis der Drehzahl des Verdichters ermöglicht es entweder, den Umgebungsdruck zu bestimmen, so dass auf einen Umgebungsdrucksensor verzichtet werden kann; oder es kann der nach dem Verdichter und vor der Drosselvorrichtung anliegende Ladedruck bestimmt werden, so dass auf einen entsprechenden Ladedrucksensor verzichtet werden kann.

Besonders vorteilhaft ist es, wenn die Drehzahl mit Hilfe eines Drucksensors ermittelt wird, weil dann zusätzlich der mittlere statische Druck verwendet werden kann, um den Umgebungsdruck und/oder den in Strömungsrichtung vor der Drosselvorrichtung anliegenden Ladedruck zu bestimmen. In diesem Fall können nicht nur der Umgebungsdrucksensor oder der Ladedrucksensor entfallen, sondern es ist sogar möglich, auf beide Sensoren verzichten zu können.

Die Erfindung betrifft ferner eine Brennkraftmaschine, die insbesondere zur Durchführung eines genannten Verfahrens geeignet ist und einen Verdichter, insbesondere einen Abgas-Turbolader aufweist, der unter Umgebungsdruck stehende Frischluft verdichtet, wobei der Verdichter ein Verdichterrad, einen Diffusor und ein Spiralgehäuse für verdichtete Frischluft aufweist. Wie in der DE 10 2005 056 517.4 beschrieben ist, kann zur Ermittlung der Drehzahl des Verdichters ein Drucksensor vorgesehen sein. Erfindungsgemäß ist vorgesehen, dass der Drucksensor an oder in dem Spiralgehäuse positioniert ist. Diese Positionierung hat den Vorteil, dass einerseits ein ausreichend hoher statischer Druck erfasst werden kann und andererseits die in diesem Bereich anliegenden Druckschwankungen genügend stark ausgeprägt sind, um die Drehzahl des Verdichters bestimmen zu können, wie dies in der DE 10 2005 056 517.4 beschrieben ist. Diesbezüglich wird auf den Inhalt der DE 10 2005 056 517.4 Bezug genommen.

Zur weiteren Optimierung der mit Hilfe des Drucksensors erfassbaren Druckwerte ist vorgesehen, dass sich das Spiralgehäuse in Umfangsrichtung von einem Anfangsbereich hin zu einem am Ausgang des Verdichters mündenden Endbereich erstreckt und dass der Drucksensor am Anfangsbereich des Spiralgehäuses angeordnet ist. In diesem Bereich liegt ein ausreichend hoher statischer Druck an. Ferner sind die in diesem Bereich anliegenden Druckschwankungen stärker ausgeprägt als im Endbereich des Spiralgehäuses, in dem die Druckschwankungen weniger stark ausgeprägt sind.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung gezeigten sowie in den Ansprüchen sowie in der Beschreibung erwähnten Merkmale jeweils einzeln für sich oder in beliebiger Kombination erfindungswesentlich sein.

### Kurze Beschreibung der Zeichnungen

Es zeigen:
- Figur 1: eine schematische Darstellung einer Brennkraftmaschine mit einem Abgasturbolader;
- Figur 2: ein Verdichterkennfeld des Abgasturboladers;
- Figur 3: eine Schnittansicht des Abgasturboladers gemäß einer ersten Schnittebene; und
- Figur 4: eine Schnittansicht des Abgasturboladers gemäß einer zweiten Schnittebene.

### Ausführungsform(en) der Erfindung

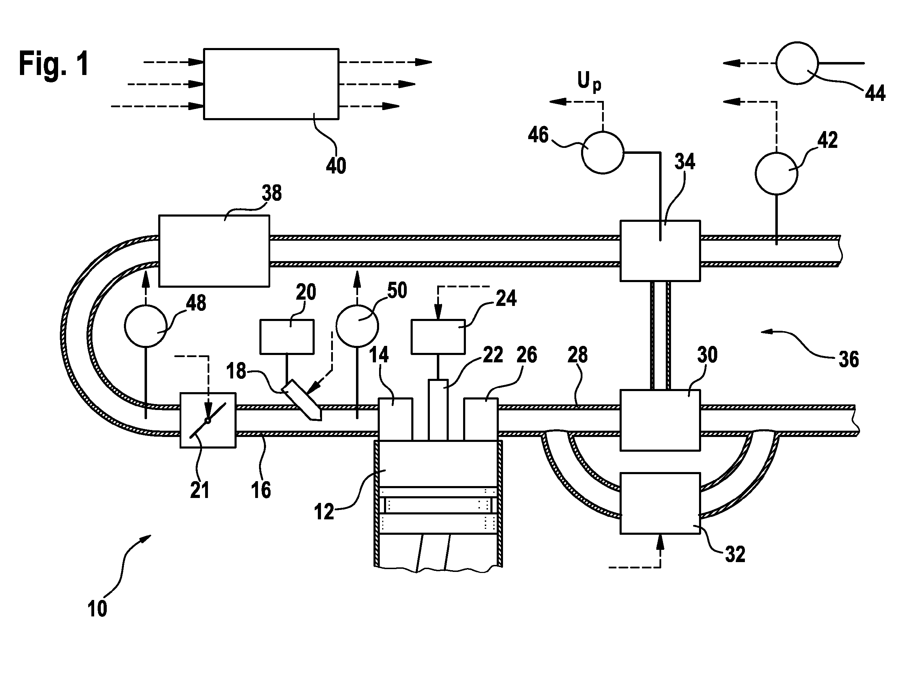

In Figur 1 trägt eine Brennkraftmaschine insgesamt das Bezugszeichen 10. Sie dient zum Antrieb eines nicht dargestellten Kraftfahrzeugs. Die Brennkraftmaschine 10 ist als Benzin-Brennkraftmaschine mit Saugrohreinspritzung ausgebildet, wesentliche grundsätzliche Inhalte der nachfolgenden Beschreibung gelten jedoch genauso für Diesel-Brennkraftmaschinen sowie für Brennkraftmaschinen mit Kraftstoff-Direkteinspritzung.

Die Brennkraftmaschine 10 umfasst mehrere Zylinder, von denen vorliegend nur einer dargestellt ist, der einen Brennraum 12 umfasst. Verbrennungsluft gelangt in diesen durch ein Einlassventil 14 über einen Ansaugkanal 16. In diesen wird, unmittelbar stromaufwärts vom Einlassventil 14, Kraftstoff durch einen Injektor 18 eingespritzt, der an ein Kraftstoffsystem 20 angeschlossen ist. Stromaufwärts von diesem befindet sich im Ansaugkanal 16 eine Drosselvorrichtung 21.

Ein im Brennraum 12 befindliches Kraftstoff-Luft-Gemisch wird von einer Zündkerze 22 entflammt, welche mit einem Zündsystem 24 verbunden ist. Heiße Verbrennungsabgase werden aus dem Brennraum 12 durch ein Auslassventil 26 und ein Abgasrohr 28 abgeleitet. In diesem ist eine Turbine 30 angeordnet, die über ein Bypassventil ("Wastegate") 32 umgangen werden kann.

Im Ansaugkanal 16 ist ein Verdichter 34 angeordnet, der mit der Turbine 30 mechanisch verbunden ist, so dass bei Drehung des Turbinenrades der Turbine 30 ein Verdichterrad des Verdichters 34 angetrieben wird. Die Turbine 30 und der Verdichter 34 bilden zusammen einen Abgas-Turbolader 36. Zur Verdichtung der Luft verfügt der Verdichter 34 über eine Mehrzahl von Verdichterflügeln oder Verdichterschaufeln, welche in Figur 1 jedoch nicht dargestellt sind. Die durch die Verdichtung erwärmte Ansaugluft wird durch einen Ladeluftkühler 38, der im Ansaugkanal 16 zwischen Verdichter 34 und Drosselvorrichtung 21 angeordnet ist, gekühlt.

Der Betrieb der Brennkraftmaschine 10 wird durch eine Steuer- und Regeleinrichtung 40 gesteuert und geregelt. Insbesondere werden die Drosselvorrichtung 21, der Injektor 18, das Zündsystem 24, und das Bypassventil 32 von der Steuer- und Regeleinrichtung 40 angesteuert. Hierzu erhält letztere Signale von verschiedenen Sensoren. In Figur 1 sind aus Übersichtsgründen sämtliche im Folgenden diskutierte Sensoren dargestellt, von denen jedoch nur jeweils unterschiedliche Teilmengen von Sensoren benötigt werden.

Im Einzelnen kann ein Heißfilm-Luftmassensensor ("HFM-Sensor") 42 vorgesehen sein, der die durch den Ansaugkanal 16 strömende Luftmasse stromaufwärts vom Verdichter 34 erfasst. Ferner kann ein Umgebungsdrucksensor 44 vorgesehen sein, mit dem der Druck der von dem Verdichter 34 zu verdichtenden Frischluft gemessen werden kann.

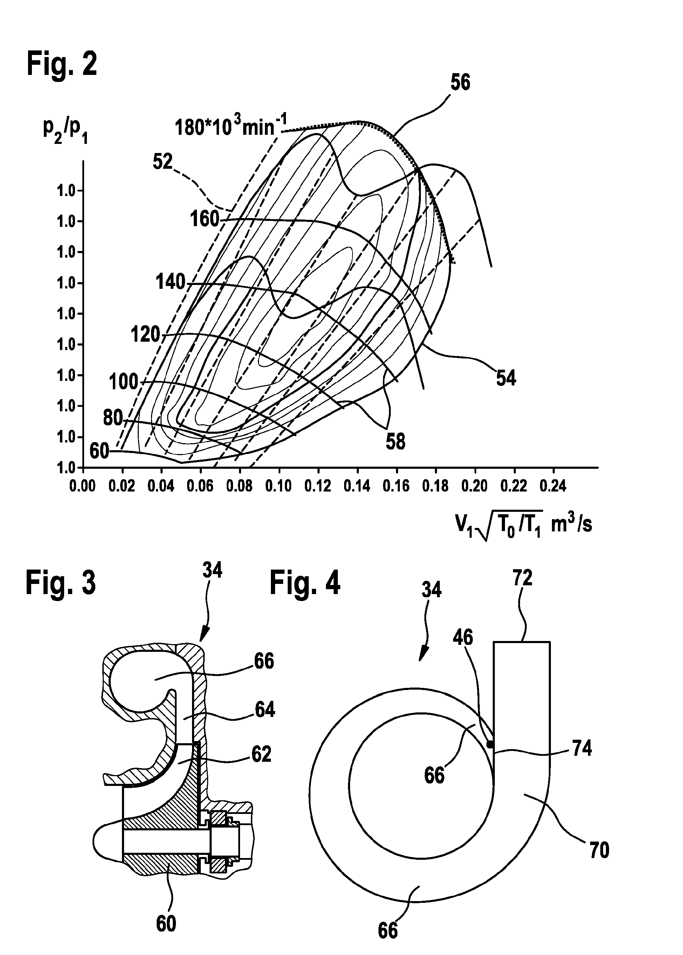

Ferner ist im vorliegenden Ausführungsbeispiel ein Drucksensor 46 vorgesehen, mit dem die Drehzahl des Abgas-Turboladers 36 und optional auch der Druck der verdichteten Luft direkt in dem Verdichter 34 erfasst werden kann. Dies ist weiter unten mit Bezug auf Figuren 3 und 4 noch genauer beschrieben. Bei anderen Ausführungsbeispielen ist anstelle des Drucksensors ein anderer Sensortyp vorgesehen, der die Ermittlung der Drehzahl des Abgas-Turboladers gestattet.

Weiterhin kann ein Ladedrucksensor 48 vorgesehen sein, der in Strömungsrichtung nach dem Verdichter 34 und vor der Drosselvorrichtung 21 angeordnet ist. Im dargestellten Beispiel ist der Ladedrucksensor in Strömungsrichtung zwischen dem Ladeluftkühler 38 und der Drosselvorrichtung 21 positioniert.

Schließlich kann die Brennkraftmaschine mit einem Saugrohrdrucksensor 50 ausgestattet sein, der zwischen der Drosselvorrichtung 21 und dem Einlassventil 14 positioniert ist.

Durch den Verdichter 34 wird die dem Brennraum 12 zugeführte Verbrennungsluft verdichtet, was eine höhere Leistung der Brennkraftmaschine 10 ermöglicht. Hierfür muss für verschiedene Betriebspunkte (Drehzahl, Last) der Brennkraftmaschine die Leistung der Turbine 30 und damit auch des Verdichters 34 variiert werden, indem das Bypassventil 32 mehr oder weniger geöffnet wird.

Um die Leistung des Verdichters 34 regeln zu können, ist es erforderlich, den Volumenstrom von Frischluft, der durch den Verdichter 34 verdichtet wird, zu kennen. Dieser Volumenstrom kann ermittelt werden, indem der von dem Luftmassensensor 42 zur Verfügung gestellte Massenstrom sowie die Dichte und Temperatur der Umgebungsluft berücksichtigt werden.

Alternativ ist es möglich, den Volumenstrom mit Hilfe eines Modells zu ermitteln, bei dem das Saugvolumen des Brennraums 12 sowie die Nockenwellenstellung der Brennkraftmaschine 10 berücksichtigt werden. Mit Hilfe eines von dem Saugrohrdrucksensor 50 erfassten Druckwerts und in Kenntnis der Temperatur der Umgebungsluft kann dann der Volumenstrom ermittelt werden. Es ist auch möglich, den zeitlichen Verlauf des mit Hilfe des Saugrohrdrucksensors 50 ermittelten Druckwerts zu berücksichtigen, um auch nicht statische Volumenströme ermitteln zu können.

Mit Hilfe des Drucksensors 46 kann die an dem Verdichter 34 anliegende Drehzahl eines Verdichterrades ermittelt werden. Da das Verdichterrad mehrere Schaufeln oder Flügel aufweist, wird die Umgebungsluft nicht kontinuierlich, sondern schwallweise verdichtet. Die Schwallfrequenz geteilt durch die Anzahl der Schaufeln oder Flügel des Verdichterrads ergibt dann die Drehzahl des Verdichters 34. Durch Kenntnis dieser Drehzahl ist es beispielsweise möglich, auf den in Figur 1 dargestellten Umgebungsdrucksensor 44 verzichten zu können. Im Folgenden wird beschrieben, wie für verschiedene Betriebszustände der Brennkraftmaschine 10 der Umgebungsdruck hergeleitet werden kann.

Wenn die Brennkraftmaschine 10 außer Betrieb genommen wird, gleichen sich die in verschiedenen Bereichen des in Figur 1 dargestellten Systems anliegenden Drücke nach kurzer Zeit aus. Hierdurch ist es möglich, vor Inbetriebnahme der Brennkraftmaschine 10 den Umgebungsdruck dadurch zu ermitteln, dass entweder das Drucksignal des Ladedrucksensors 48 oder auch das Drucksignal des Saugrohrdrucksensors 50 verwendet wird.

Wenn die Brennkraftmaschine 10 im nicht aufgeladenen Zustand arbeitet, lässt sich der Umgebungsdruck mit Hilfe des Drucksignals des Ladedrucksensors 48 ermitteln. Hierfür muss die Druckänderung, die sich entlang des Strömungswegs vom Luftfilter (nicht dargestellt), den Verdichter 34 über den Ladeluftkühler 38 bis hin zu dem Ladedrucksensor 48 ergibt, mit Hilfe bekannter Druckänderungsgleichungen ermittelt und zu dem mit Hilfe des Ladedrucksensors ermittelten Druckwert addiert werden. Die geringe Druckänderung am Verdichter 34 kann dabei beispielsweise durch ein Kennfeld beschrieben werden. Zur Adressierung des Kennfelds werden der Volumenstrom und die Drehzahl des Verdichters 34 herangezogen.

Um den Umgebungsdruck auch im aufgeladenen Zustand der Brennkraftmaschine 10 ermitteln zu können, wird ein Verdichterkennfeld des Verdichters 34 herangezogen, das in Figur 2 dargestellt ist. Dort ist auf der Abszisse der auf die anliegende Umgebungstemperatur normierte Volumenstrom aufgetragen. Auf der Ordinate ist das Druckverhältnis angegeben, dass sich durch Division der Druckwerte ergibt, die an dem Ausgang und dem Eingang des Verdichters 34 anliegen.

Das in Figur 2 dargestellte Kennfeld ist linker Hand durch eine so genannte Pumpgrenze 52 begrenzt. Rechter Hand ist das Kennfeld begrenzt durch eine so genannte Stopfgrenze 54. Ferner ist das Kennfeld begrenzt durch eine Linie 56, die die maximale Drehzahl des Verdichters 34 angibt. Innerhalb des Kennfelds sind weitere Linien 58 eingezeichnet, die sich jeweils zwischen der Pumpgrenze 52 und der Stopfgrenze 54 erstrecken und sich auf jeweils eine bestimmte Drehzahl des Verdichters 34 beziehen.

Um nun den Umgebungsdruck im aufgeladenen Zustand der Brennkraftmaschine 10 zu ermitteln, wird zunächst ein Schätzwert angenommen, der sich beispielsweise aus dem Wert für den Umgebungsdruck bei Inbetriebnahme der Brennkraftmaschine 10 ergibt. Der in Figur 2 dargestellte Volumenstrom lässt sich wie oben bereits beschrieben ermitteln. Da mit Hilfe des Drucksensors 46 auch die Drehzahl des Verdichters 34 bekannt ist, kann das in Figur 2 auf der Ordinate dargestellte Druckverhältnis ermittelt werden. Der am Ausgang des Verdichters 34 anliegende Druck p2 kann ermittelt werden, indem das Drucksignal des Ladedrucksensors 48 verwendet wird und die Druckänderung über die Rohrleitung und den Ladeluftkühler berücksichtigt wird. Hiervon ausgehend lässt sich der Wert p1 ermitteln, der gleich dem Umgebungsdruck gesetzt wird. Mit diesem neuen Wert für den Umgebungsdruck wird das vorstehend beschriebene Verfahren erneut durchlaufen, um sich iterativ einem korrekten Wert für den Umgebungsdruck zu nähern.

Es ist auch möglich, auf den Ladedrucksensor 48 zu verzichten und den in diesem Bereich herrschenden Ladedruck wie nachstehend geschildert zu ermitteln. Im aufgeladenen Zustand der Brennkraftmaschine 10 entspricht der Wert p1 dem mit Hilfe des Umgebungsdrucksensors ermittelten Umgebungsdruck. Mit Hilfe des wie oben ermittelten Volumenstroms sowie mit Hilfe der bekannten Verdichterdrehzahl kann aus dem in Figur 2 dargestellten Verdichterkennfeld das Druckverhältnis p2/p1 ermittelt werden. Um nun den im Bereich des (in diesem Fall nicht vorhandenen) Ladedrucksensors 48 vorhandenen Druck zu ermitteln, muss ausgehend von dem Wert p2 nun noch die Druckänderung berücksichtigt werden, der sich über die Rohrleitungen und den Ladeluftkühler 38 ergibt.

Mit Hilfe des Drucksensors 48 kann dann, wenn - wie im vorliegenden Ausführungsbeispiel - die Drehzahl mittels des Signals des Drucksensors 46 ermittelt wird, nicht nur die Drehzahl des Verdichters 34, sondern auch der an dem Verdichter anliegende statische Druck bestimmt werden. Da man sich in diesem Fall zusätzlich auf einen gemessenen Druck abstützen kann, kann man den Druck stromaufwärts von der Drosselklappe 21 besonders gut modellieren. Mit weiterem Bezug auf Figur 3 und 4 umfasst der Verdichter 34 ein Verdichterrad 60, das an seinem Umfang verteilte Schaufeln 62 aufweist. Diese verdichten axial angesaugte Luft und befördern diese nach radial außen in einen Diffusor 64. Dieser mündet entlang seines Umfangs an einen in Figur 4 schematischen dargestellten Spiralgehäuse 66. Dieses erstreckt sich spiralförmig von einem Anfangsbereich 68 hin zu einem Endbereich 70, der an einem Ausgang 72 des Verdichters 34 mündet. Der Eingangsbereich 68 sowie der Endbereich 70 sind mit Hilfe eines Trennelements 74 voneinander getrennt. Es wird nun vorgeschlagen, den Drucksensor 46 im Anfangsbereich 68 des Spiralgehäuses 66 zu positionieren. In diesem Bereich ist das mit Hilfe des Drucksensors 46 erfassbare statische Drucksignal genügend hoch, wobei die durch die Rotation der Schaufeln 62 entstehenden Druckschwankungen ebenfalls genügend hoch sind, so dass mit Hilfe des Drucksensors 46 sowohl ein statisches Drucksignal gewonnen werden kann als auch die Drehzahl des Verdichterrads 60 des Verdichters 34. Der mit Hilfe des Drucksensors 46 ermittelte statische Druck kann ebenfalls verwendet werden, um den Druck im Bereich des Umgebungsdrucksensor 42 und/oder des Ladedrucksensor 48 zu bestimmen oder auch zu plausibilisieren.

## Patentansprüche

1. Verfahren zum Betrieb einer Brennkraftmaschine (10), bei der Frischluft mit Hilfe eines Verdichters (34), insbesondere eines Abgas-Turboladers (36), verdichtet und über eine Drosselvorrichtung (21) in einen Brennraum (12) der Brennkraftmaschine (10) gelangt, **dadurch gekennzeichnet, dass** eine Drehzahl des Verdichters (34) verwendet wird, um eine für die Steuerung der Brennkraftmaschine verwendete Druckgröße, insbesondere den Umgebungsdruck oder einen in Strömungsrichtung nach dem Verdichter (34) und vor der Drosselvorrichtung (21) anliegenden Ladedruck zu bestimmen.

2. Verfahren nach Anspruch 1, **dadurch gekennzeichnet, dass** die Drehzahl des Verdichters (34) mit Hilfe eines Drucksensors (46) und unter Berücksichtigung eines mittleren statischen Drucks ermittelt wird.

3. Verfahren nach Anspruch 2, **dadurch gekennzeichnet, dass** der mit Hilfe des Drucksensors (46) ermittelte Druck verwendet wird, um den Umgebungsdruck und/oder den in Strömungsrichtung vor der Drosselvorrichtung (21) anliegenden Ladedruck zu bestimmen.

4. Verfahren nach einem der vorhergehenden Ansprüche, **dadurch gekennzeichnet, dass** der Ladedruck für eine Position entlang des Strömungswegs ermittelt wird, die zwischen einem dem Verdichter (34) nachgeschalteten Ladeluftkühler (38) und der Drosselvorrichtung (21) liegt.

5. Verfahren nach mindestens einem der vorhergehenden Ansprüche, **dadurch gekennzeichnet, dass** der Umgebungsdruck vor Inbetriebnahme der Brennkraftmaschine (10) mit Hilfe eines Saugrohrdrucksensors (50) ermittelt wird, der nach der Drosselvorrichtung (21) und vor dem Brennraum (12) positioniert ist.

6. Verfahren nach mindestens einem der vorhergehenden Ansprüche, **dadurch gekennzeichnet, dass** der Umgebungsdruck im nicht aufgeladenen Zustand der Brennkraftmaschine (10) mit Hilfe eines von einem Ladedrucksensor (48) gemessenen Ladedrucks ermittelt wird, der in Strömungsrichtung nach dem Verdichter (34) und vor der Drosselvorrichtung (21) positioniert ist.

7. Verfahren nach mindestens einem der vorhergehenden Ansprüche, **dadurch gekennzeichnet, dass** der Ladedrucksensor (48) zwischen einem dem Verdichter (34) nachgeschalteten Ladeluftkühler (38) und der Drosselvorrichtung (21) positioniert ist.

8. Verfahren nach mindestens einem der vorhergehenden Ansprüche, **dadurch gekennzeichnet, dass** der Umgebungsdruck oder der Ladedruck im aufgeladenen Zustand der Brennkraftmaschine (10) mit Hilfe eines Verdichterkennfeldes ermittelt wird.

9. Verfahren nach mindestens einem der vorhergehenden Ansprüche, **dadurch gekennzeichnet, dass** zur Ermittlung des Umgebungsdrucks der gemessene Ladedruck um einen Druckwert korrigiert wird, der sich durch die Druckänderung in einem Bereich zwischen dem Ausgang (72) des Verdichters (34) und dem Ladedrucksensor (48) ergibt.

10. Verfahren nach mindestens einem der vorhergehenden Ansprüche, **dadurch gekennzeichnet, dass** zur Ermittlung des Ladedrucks der aus dem Verdichterkennfeld ermittelte Druck am Ausgang (72) des Verdichters (34) um einen Druckwert korrigiert wird, der sich durch die Druckänderung in einem Bereich zwischen dem Ausgang (72) des Verdichters (34) und dem Ladedrucksensor (48) ergibt.

11. Verfahren nach Anspruch 5 oder 6, **dadurch gekennzeichnet, dass** der ermittelte Umgebungsdruck als Startwert für ein Verfahren nach einem der Ansprüche 7 bis 9 verwendet wird und dass danach das Verfahren nach einem der Ansprüche 7 bis 9 iterativ durchlaufen wird.

12. Brennkraftmaschine (10), insbesondere zur Durchführung eines Verfahrens nach mindestens einem der vorhergehenden Ansprüche, mit einem Verdichter (34), insbesondere einem Abgas-Turbolader (36), der unter Umgebungsdruck stehende Frischluft verdichtet, wobei der Verdichter (34) ein Verdichterrad (60), einen Diffusor (64) und ein Spiralgehäuse (66) für verdichtete Frischluft aufweist, wobei zur Ermittlung der Drehzahl des Verdichters (34) ein Drucksensor (46) vorgesehen ist, **dadurch gekennzeichnet, dass** der Drucksensor (46) an oder in dem Spiralgehäuse (66) positioniert ist.

13. Brennkraftmaschine nach Anspruch 16, **dadurch gekennzeichnet, dass** sich das Spiralgehäuse (66) in Umfangsrichtung von einem Anfangsbereich (68) hin zu einem am Ausgang (72) des Verdichters (34) mündenden Endbereich (70) erstreckt und dass der Drucksensor (46) im Anfangsbereich (68) des Spiralgehäuses (66) angeordnet ist.
